# EUROPEAN PATENT APPLICATION

(11) **EP 3 116 200 A2**
(43) Date of publication of application: **11.01.2017**
(21) Application number: 16178921.9
(22) Date of filing: 11.07.2016
(51) Int. Cl.: H04L 29/08, H04W 4/02, H04W 4/00, H04W 64/00, G01S 1/02

(54) **PASSENGER CONVEYANCE WAY FINDING BEACON SYSTEM AND METHOD**

(30) Priority: 10.07.2015 US 201562190934 P
(71) Applicant: Otis Elevator Company, Farmington, Connecticut 06032 (US)
(72) Inventor: SIMCIK, Paul A, Farmington, CT 06032 (US)
(74) Representative: Gardiner, Stephen Robin

(57) **Abstract**

A wayfinder system includes at least one beacon operable to transmit information that relates a position of the beacon with respect to a predefined destination. A method of directing a user to a passenger conveyance includes receiving information that relates a position of a beacon with respect to a predefined destination and displaying directions to the predefined destination from the information via a mobile device application. A method of configuring a wayfinder system for a passenger conveyance includes transiting a route from an initial point to a predefined destination; receiving information from at least one beacon along the route from the initial point to the predefined destination; and communicating the received information to the beacon such that the beacon is operable to transmit a position of the beacon with respect to the predefined destination.

## Description

### BACKGROUND

The present disclosure relates to a passenger conveyance and, more particularly, to a beacon system to facilitate direction of passengers.

An elevator system may utilize a keypad and/or touchscreen device with destination dispatching, such that the user may specify a floor as part of a request for service. Typically, the passenger engages in an affirmative action to request service by using devices available at the facility where the elevator system is located. In other systems, beacon technology provides basic data to trigger contact between an Internet based service and a mobile device for service.

### SUMMARY

A wayfinder system according to one disclosed non-limiting embodiment the present disclosure can include at least one beacon operable to transmit information that relates a position of the beacon with respect to a predefined destination.

A further embodiment of the present disclosure may include, wherein the information the information includes distance information transmitted via a wireless personal area network technology.

A further embodiment of any of the embodiments of the present disclosure may include, wherein the information is transmitted via Wi-Fi.

A further embodiment of any of the embodiments of the present disclosure may include, wherein the information is transmitted via Bluetooth low energy.

A further embodiment of any of the embodiments of the present disclosure may include, wherein the predefined destination includes an elevator car.

A further embodiment of any of the embodiments of the present disclosure may include, wherein the at least one beacon includes a plurality of beacons, each of the plurality of beacons separately identifiable.

A further embodiment of any of the embodiments of the present disclosure may include, wherein the at least one beacon includes a plurality of beacons, each of the plurality of beacons transmitting at a different strength.

A further embodiment of any of the embodiments of the present disclosure may include a mobile device application operable to determine a position of the mobile device with respect to the predefined destination from the information transmitted by the beacon.

A further embodiment of any of the embodiments of the present disclosure may include, wherein the mobile device application is operable to display directions to the predefined destination.

A further embodiment of any of the embodiments of the present disclosure may include, wherein the mobile device application is operable to request elevator service.

A further embodiment of any of the embodiments of the present disclosure may include, wherein the mobile device application is operable to time the elevator service to an arrival time of a user to the predefined destination.

A method of directing a user to a passenger conveyance, the method according to another disclosed non-limiting embodiment of the present disclosure can include receiving information that relates a position of a beacon with respect to a predefined destination; and displaying directions to the predefined destination from the information via a mobile device application.

A further embodiment of any of the embodiments of the present disclosure may include receiving information from a plurality of beacons, information from each of the plurality of beacons relates a position of the respective beacon with respect to the predefined destination.

A further embodiment of any of the embodiments of the present disclosure may include determining a position of the mobile device with respect to the predefined destination from the information transmitted by the beacon.

A further embodiment of any of the embodiments of the present disclosure may include triangulating a position of the mobile device with respect to the predefined destination from the information transmitted by a plurality of beacons each of the plurality of beacons separately identifiable by the mobile device application.

A further embodiment of any of the embodiments of the present disclosure may include determining a movement speed of the mobile device.

A further embodiment of any of the embodiments of the present disclosure may include timing a service request such that a passenger conveyance will arrive at the predefined destination when a user of the mobile device arrives at the predefined destination.

A method of configuring a wayfinder system for a passenger conveyance, the method according to another disclosed non-limiting embodiment of the present disclosure can include transiting route information from an initial point to a predefined destination; receiving information from at least one beacon along the route from the initial point to the predefined destination; and communicating the received information to the beacon such that the beacon is operable to transmit a position of the beacon with respect to the predefined destination.

A further embodiment of any of the embodiments of the present disclosure may include initializing a service application on a mobile device prior to transiting the route information and receiving information from the at least one beacon via the service application.

A further embodiment of any of the embodiments of the present disclosure may include, wherein the predefined destination includes an elevator.

The foregoing features and elements may be combined in various combinations without exclusivity, unless expressly indicated otherwise. These features and elements as well as the operation thereof will become more apparent in light of the following description and the accompanying drawings. It should be appreciated, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic view of an elevator system according to one disclosed non-limiting embodiment;
Figure 2 is a schematic view an elevator dispatch interface;
Figure 3 is a schematic view for a waiting area for an elevator system;
Figure 4 is a representation of a wayfinder system operation;
Figure 5 is a block diagram of a method of wayfinder system usage; and
Figure 6 is a block diagram for wayfinder system set-up.

### DETAILED DESCRIPTION

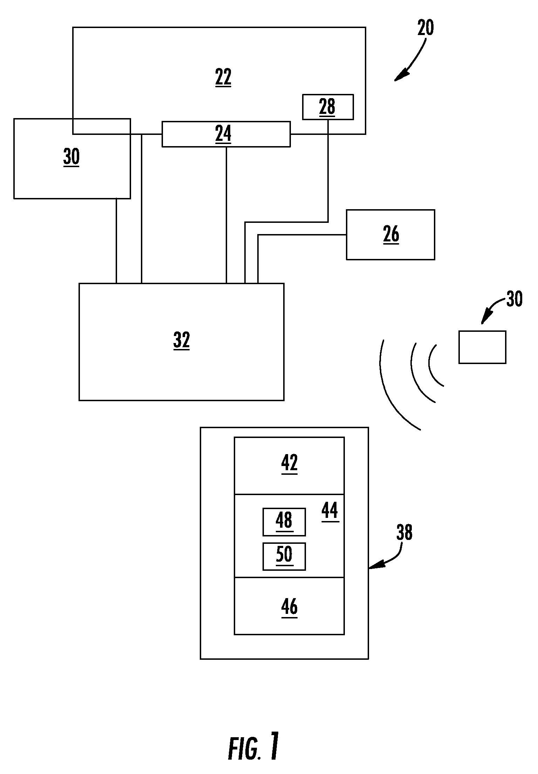

Figure 1 schematically illustrates a passenger conveyance system 20 such as an elevator system. The system 20 can include an elevator car 22 with an elevator door 24, a fixture 26 external to the elevator car 22, a car-operating panel (COP) 28 internal to the elevator car 22, a wayfinder system 30, and a control system 32. It should be appreciated that although an elevator system is disclosed and illustrated as an example herein, other passenger conveyance systems such as escalator systems, mass transit systems, secure checkpoints, video monitoring, hotel room access, and other detection, security, and identification, will also benefit herefrom. That is, passenger conveyance may be broadly construed as controls associated with passage of an individual or an identifiable group of individuals. It should be further appreciated that the fixture 26 may include a physically immobile device as well as a "temporary kiosk." It should be still further appreciated that although particular systems are separately defined, each or any of the systems may be otherwise combined or separated via hardware and/or software.

The passenger conveyance system 20 can utilize a passenger-initiated input to request service from the fixture 26. Input from the fixture 26 may include a push button, e.g., up, down, or desired destination, to request elevator service. The passenger-initiated input is operable to notify the control system 32 that a passenger requires elevator service. In response, the control system 32 will dispatch an elevator car 22 to the appropriate floor and may communicate a car assignment to the passenger. Optionally, once inside the elevator car 22, the passenger may push a button on the car-operating panel (COP) 28 to designate or change the desired destination.

The passenger conveyance system 20 can alternatively or additionally communicate with a mobile device 38 e.g., a smartphone, that operate as a temporary kiosk to notify the control system 32 of a passenger service request such as that to request elevator service.

The mobile device 38 generally includes a control module 40 with a processor 42, a memory 44, and an interface 46. The processor 42 may be any type of microprocessor having desired performance characteristics. The memory 44 may include any type of computer readable medium that stores the data and executable instructions 48 described herein below. The executable instructions may be stored or organized in any manner and at any level of abstraction, such as in connection with one or more applications 48, processes, routines, procedures, methods, etc. The memory 44 may also store data 50 that, for example, includes a user profile or registration data, elevator car data, a device identifier, or any other type of data. The instructions stored in the memory 44 may be executed by the processor 42. The processor 42 may be operative on the data 50. The processor 42 may be coupled to the interface 46 that may include one or more of a keyboard or keypad, a touchscreen or touch panel, a display screen, a microphone, a speaker, etc. The interface 46 may also support a graphical user interface (GUI) and/or voice-to-text capabilities.

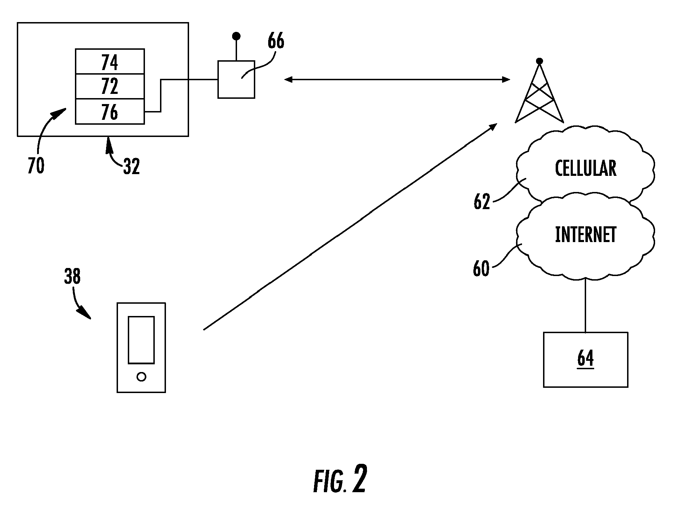

With reference to Figure 2, the mobile device 38 may be utilized to request service in a passive manner. For example, a profile may be established by a user of the mobile device 38, optionally as part of a registration process with, e.g., an elevator service provider. The profile may, for example, specify the specific destination floor desired at a particular time of day when the user passes adjacent a particular beacon 80 such that the beacon detection may triggers the application on the mobile device 38 to look up the profile settings and then automatically issue the elevator request. Resources may be provisioned or allocated to fulfill the request, e.g., an elevator car call may be placed in the event that the probability of requested service, or consumption or use of a resource associated with the service, is greater than a threshold.

The request for service may be conveyed or transmitted from the mobile device 38 to one or more networks. For example, the request for service may be transmitted to the Internet 60 and/or a cellular network 62. The network(s) may include infrastructure that may be organized to facilitate cloud computing. For example, a cloud 64 may include one or more servers, such as a primary message server, a backup message server, and a device commissioning message server.

In some embodiments, the request for service may specify a type of service requested, at any level of detail or abstraction. For example, a first request for service may specify that elevator service is requested, a second request for service may specify one or more of a departure floor or landing and/or a destination floor or landing, and a third request for service may specify that elevator service is desired to accommodate a heavy load (e.g., freight or cargo) with a number of other users or passengers in an amount less than a threshold. In some embodiments, the request for service transmitted from the mobile device 38 may include an identifier associated with the user to distinguish between a multitude of mobile devices 38 and thus users.

The servers may be configured to process requests for service received from the mobile device 38. As part of the processing, the servers may validate or authenticate the mobile device 38 potentially based on a location of the mobile device 38. In one embodiment, the location may be determined via the signal strength relative the wayfinder system 30, in other embodiments, the location may be determined based on one or more location-based services or techniques, such as triangulation, global positioning system (GPS), etc. In some embodiments, the user may need to be within a threshold distance of a location (e.g., a building) where the requested service is provided in order for the service request to be approved. Such validation or conditional-approval may be used to minimize nuisance calls to the location or prevent intentional service-attacks.

In response to a validated service request, the service request may be transmitted from the servers 64 to the control system 32. The service request may be routed through a communication device 66, such as a gateway. The device 66 may be configured to monitor for service requests. The device 66 may be coupled to the servers 64 and/or the networks 60, 62 via one or more mediums, such as a phone line, a cable, a fiber optic line, etc. The control system 32 may then dispatch a resource to fulfill the service request, potentially based on one or more considerations, such as power consumption/efficiency, quality of service, etc.

The control system 32 can include a control module 70 with a processor 72, a memory 74, and an interface 76. The control module 70 can include a portion of a central control, a stand-alone unit, or other system such as a cloud-based system. The processor 72 can include any type of microprocessor having desired performance characteristic. The memory 74 may include any type of computer readable medium that stores the data and control processes disclosed herein. That is, the memory 74 is an example computer storage media that can have embodied thereon computer-useable instructions such as a process that, when executed, can perform a desired method. The interface 76 of the control module 70 can facilitate communication between the control module 40 and other systems such as the device 66 internal or external to the elevator system, e.g. building management systems.

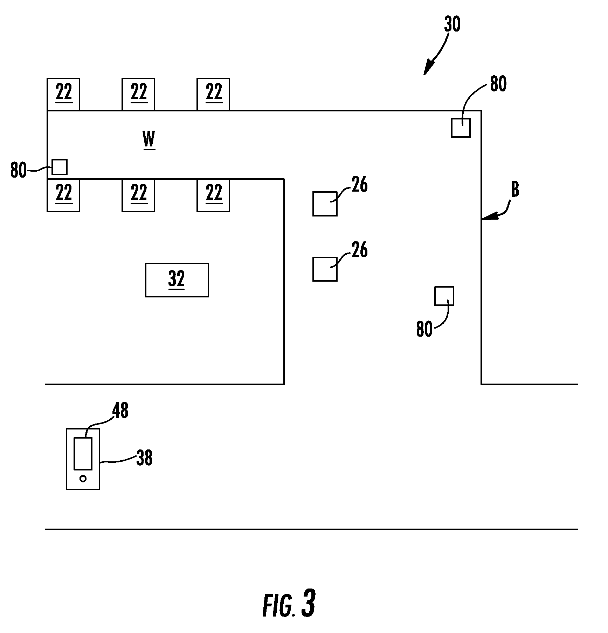

With reference to Figure 3, the control system 32 may be separate from, or communicate with, the wayfinder system 30 that includes at least one beacon 80. That is, the wayfinder system 30 may be separately installed for a location or within a building and operate separately from, or in conjunction with, the control system 32. It should be appreciated that the term "beacon" is used throughout this disclosure for any beacon technology such as Bluetooth Low Energy, Wi-Fi, and/or any other relatively short distance transmitting technology.

In one example, the wayfinder system 30 includes a plurality of beacons 80 that are each aware of their own location in a building "B" with respect to a predefined destination such as the location of the elevator bank that includes one or more elevator cars 22, an escalator, a transportation, transfer point, etc. The wayfinder system 30 is operable to transmit information utilizable by the application 48 on the mobile device 38 such that the application 48 can direct a user to the elevator cars 22.

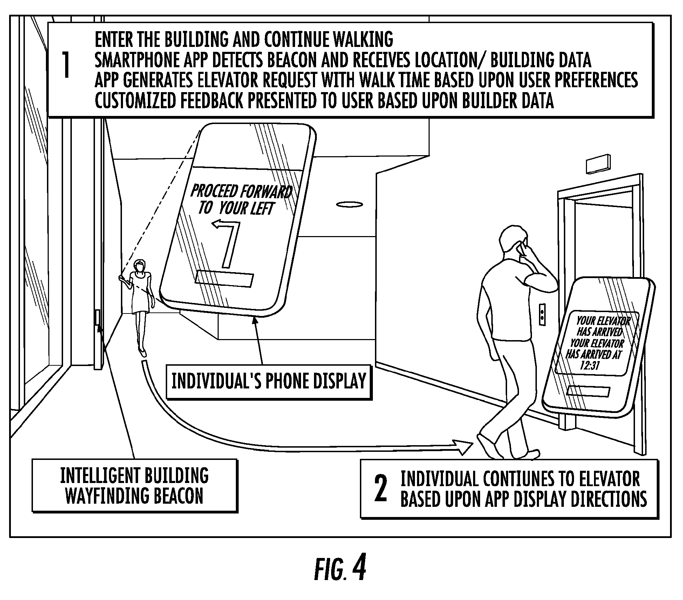

The plurality of beacons 80 may be arranged to facilitate overlapping coverage of an area W. The beacons 80 may be installed at adjacent building entrances that are each a known distance from the predefined destination such that the application 48 receives such distance information. In one embodiment, each of the plurality of beacons 80 may be of various signal strength or other differentiation protocol such that the mobile device 38 may further determine its relatively position, distance, direction, and/or velocity, with respect to the predefined destination such as the elevator bank from the transmissions of the beacons 80 for use by the application 48 (Figure 4). That is, the application 48 may utilize the transmission from the plurality of beacons 80 via triangulation, signal strength, or other differentiation to determine the location relative to predefined destination and thereby guide the user to a particular elevator car 22. In one embodiment, the transmission from the plurality of beacons 80 are accessed in real time when required by the mobile device 38 and thus the mobile device 38 need not store a layout data of the building "B". In another embodiment, the mobile device 38 may alternatively or additionally store layout data of the building "B" to facilitate, for example, points of interest within the building "B".

Each of the beacons 80 may be installed discretely or in visible locations depending upon architectural requirements. The plurality of beacons 80 may be installed in standard product fixtures or as stand-alone devices. Information to be transmitted such as the relative location of each beacon 80 to the predefined destination may be stored locally in each beacon 80 and thus need not be otherwise managed/maintained.

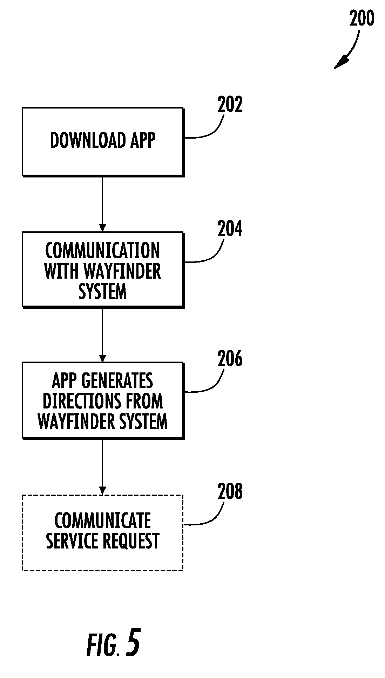

With reference to Figure 5, a method 200 for operation of the wayfinder system 30 is disclosed in terms of functional block diagrams. It should be appreciated that these functions may be enacted in either dedicated hardware circuitry or programmed software routines capable of execution in various microprocessor based electronics control embodiments.

In one embodiment, a user downloads the application 48 to his or her mobile device 38 and establishes a user profile, optionally as part of a registration process (step 202). For an expected location or building such as the user's office building, the user may indicate desired service requests such as to take the user to the 50^{th} floor between 7am-9am, to a restaurant floor between 11am-1pm; and to the lobby, between 3pm-7pm (step 204). Similar desired service request may be stored for other expected locations or buildings frequented by the user.

Next, when the user enters an expected location, such as the Building "B" (Figure 3), the application 48 communicates with the wayfinder system 30 (step 204). The application 48 then utilizes the transmissions from the wayfinder system 30 to direct the user to the predefined destination such as the elevator bank (step 206). The direction may be provided via text, arrows, and/or other symbology readily viewable on the mobile device while the user is walking (Figure 4).

Alternatively, or in addition, the application 48 may communicate the service request through the communication device 66 thence to the control system 32, such as one or more elevator controllers (step 208; Figure 2). The service request may be specifically tailored for the user as the application 48 may utilizes the transmissions from the wayfinder system 30 to determine the user's walking speed and distance to the predetermined destination. That is, the transmissions from the wayfinder system 30 may be used by the application 48 to time the service request such that an elevator car is awaiting the user upon arrival to the elevator bank. Alternatively, or in addition, fundamental distance information can be communicated to the to the control system 32 by the application 48.

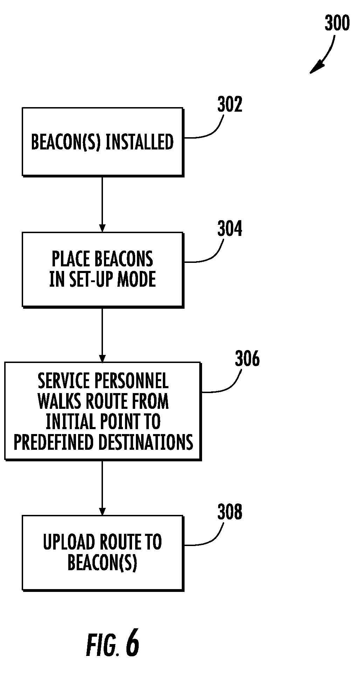

In one embodiment, the application 48 may use data received from the closest beacon 80 that has the strongest signal. This closest beacon provides to the application 48 its own stored distance information between the beacon 80 and the predefined destination such as the elevator bank. This distance information would be stored during the installation process (Figure 6; Step 308). The application 48 thus receives the distance information and may include such information with the service request through the communication device 66 thence to the control system 32, such as one or more elevator controllers (step 208; Figure 2). Since the application 48 may also translate distance to a 'walking time' based upon user's normal walking speed, the application 48 can readily transmit the expected walking time to the predefined destination such as the elevator bank. Further, a default walking rate may be utilized to translate distance to time until the application 48 determines the associated user's actual walking rate.

It should be appreciated that the wayfinder system 30 may be completely independent of the control system 32. The profile may be accessed or analyzed to determine the likelihood or probability that the user will request service at a particular moment in time (e.g., a particular day or time of day). Resources may be provisioned or allocated to fulfill the request (e.g., an elevator car call may be placed) in the event that the probability of requested service, or consumption or use of a resource associated with the service, is greater than a threshold. For example, should the user enter a building which is not within the user profile, the application 48 can still communicate with the wayfinder system 30 to provide direction for the user.

With reference to Figure 6, in another embodiment, a method 300 for configuration of the wayfinder system 30 is disclosed in terms of functional block diagrams. The method 300 to configure the wayfinder system 30 readily permits a customized installation or reconfiguration.

Initially, the beacons 80 are installed in their desired locations (step 302). Then, service personnel access a service application on the mobile device that can place the plurality of beacons 80 in a set-up mode (step 304). The service personnel can then walk a route from an initial point such as a lobby entrance to the predefined destination such as the elevator bank (step 306). It should be appreciated that "route" includes a distance between the beacon 80 and the predefined destination that is stored in the associated beacon 80. The installer may walk the route or otherwise measure this distance with a tape measure or other device to determine the building layout.

The service personnel may tracked by the service application with respect to the plurality of beacons 80 as a test run route to the predetermined destination such as from a building entrance to determine information such as relative distance. The service application may be utilized to measure distance and other variables to track the movement of the service personnel from the initial point to the predefined destination and generate distance information and/or other guidance information therefrom, alternatively. The service personnel may perform the route multiple times to facilitate accurate data gathering from the plurality of beacons 80 and be utilized to program the plurality of beacons 80 to their relative position with respect to the predefined destination.

Then, once the route information is confirmed, the service application can be utilized upload the information to be transmitted from the plurality of beacons 80 (step 308). That is, the service application first reads the information determined by the service personnel that is then later utilized to provide the route information that is transmitted from the plurality of beacons 80 to guide regular users via transmission thereof.

The plurality of beacons 80 can be readily installed and configured by elevator service personnel, as the original architectural layout may differ from actual installation. Further, relevant data is stored locally in the plurality of beacons 80 and is reconfigurable locally if building layout or location of beacons 80 are changed.

The elements disclosed and depicted herein, including in flow charts and block diagrams throughout the figures, imply logical boundaries between the elements. However, according to software or hardware engineering practices, the depicted elements and the functions thereof may be implemented on machines through computer executable media having a processor capable of executing program instructions stored thereon as a monolithic software structure, as standalone software modules, or as modules that employ external routines, code, services, and so forth, dynamically loaded or updated modules, or any combination of these, and all such implementations may be within the scope of the present disclosure.

It should be appreciated that like reference numerals identify corresponding or similar elements throughout the several drawings. It should also be appreciated that although a particular component arrangement is disclosed in the illustrated embodiment, other arrangements will benefit herefrom.

Although the different non-limiting embodiments have specific illustrated components, the embodiments are not limited to those particular combinations. It is possible to use some of the components or features from any of the non-limiting embodiments in combination with features or components from any of the other non-limiting embodiments.

Although particular step sequences are shown, disclosed, and claimed, it should be appreciated that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically disclosed. For that reason the appended claims should be studied to determine true scope and content.

## Claims

1. A wayfinder system, comprising:
at least one beacon operable to transmit information that relates a position of the beacon with respect to a predefined destination.

2. The system as recited in claim 1, wherein the information includes distance information transmitted via a wireless personal area network technology.

3. The system as recited in claim 1 or 2, wherein the information is transmitted via Wi-Fi, or wherein the information is transmitted via Bluetooth low energy.

4. The system as recited in any preceding claim, wherein the predefined destination includes an elevator car.

5. The system as recited in any preceding claim, wherein the at least one beacon includes a plurality of beacons, each of the plurality of beacons separately identifiable.

6. The system as recited in any preceding claim, wherein the at least one beacon includes a plurality of beacons, each of the plurality of beacons transmitting at a different strength.

7. The system as recited in any preceding claim, further comprising a mobile device application operable to determine a position of the mobile device with respect to the predefined destination from the information transmitted by the beacon, and preferably wherein the mobile device application is operable to display directions to the predefined destination.

8. The system as recited in claim 7, wherein the mobile device application is operable to request elevator service, and preferably wherein the mobile device application is operable to time the elevator service to an arrival time of a user to the predefined destination.

9. A method of directing a user to a passenger conveyance, the method comprising:
receiving information that relates a position of a beacon with respect to a predefined destination; and
displaying directions to the predefined destination from the information via a mobile device application.

10. The method as recited in claim 9, further comprising receiving information from a plurality of beacons, information from each of the plurality of beacons relates a position of the respective beacon with respect to the predefined destination.

11. The method as recited in claim 9 or 10, further comprising determining a position of the mobile device with respect to the predefined destination from the information transmitted by the beacon.

12. The method as recited in claim 9, 10 or 11, further comprising triangulating a position of the mobile device with respect to the predefined destination from the information transmitted by a plurality of beacons each of the plurality of beacons separately identifiable by the mobile device application.

13. The method as recited in any of claims 9 to 12, further comprising determining a movement speed of the mobile device, and preferably further comprising timing a service request such that a passenger conveyance will arrive at the predefined destination when a user of the mobile device arrives at the predefined destination.

14. A method of configuring a wayfinder system for a passenger conveyance, the method comprising:
transiting route information from an initial point to a predefined destination;
receiving information from at least one beacon along the route from the initial point to the predefined destination; and
communicating the received information to the beacon such that the beacon is operable to transmit a position of the beacon with respect to the predefined destination;
wherein the predefined destination optionally includes an elevator.

15. The method as recited in claim 14, further comprising initializing a service application on a mobile device prior to transiting the route information and receiving information from the at least one beacon via the service application.
